# EUROPEAN PATENT APPLICATION

(11) **EP 4 691 763 A1**
(43) Date of publication of application: **11.02.2026**
(21) Application number: 24779009.0
(22) Date of filing: 28.02.2024
(51) Int. Cl.: B32B 27/00, B32B 27/16, B32B 27/30

(54) **DECORATIVE SHEET AND DECORATIVE BOARD**

(30) Priority: 24.03.2023 JP 2023048487
(71) Applicant: Dai Nippon Printing Co., Ltd., Tokyo 162-8001 (JP)
(72) Inventor: NAKAJIMA, Tomomi, Tokyo 162-8001 (JP)
(74) Representative: Müller-Boré & Partner Patentanwälte PartG mbB
(86) International application number: PCT/JP2024/007302
(87) International publication number: WO 2024/202869

(57) **Abstract**

The present invention provides a decorative sheet having a surface-protecting layer that has excellent adhesion to the lower layer, and having excellent surface hardness and scratch resistance, as well as excellent processability. The present invention provides a decorative sheet having at least a surface-protecting layer, the surface-protecting layer containing a crosslinked curable resin, and the decorative sheet having a peak height ratio of A to B ((A/B)×100 (%)) of 105% or more and 400% or less, with A representing the height of a peak appearing at 855 to 1325 cm⁻¹ and B representing the height of a peak appearing at 1650 to 1800 cm⁻¹, in infrared spectroscopic measurement of the surface-protecting layer, and a peak height ratio of B to C ((B/C)×100 (%)) of 1000% or more and 6000% or less, with C representing the height of a peak appearing at 3200 to 3500 cm⁻¹, in infrared spectroscopic measurement of the surface-protecting layer.

## Description

### Technical Field

The present invention relates to a decorative sheet and a decorative plate.

### Background Art

Decorative sheets are used by being bonded to the surfaces of wood boards, plastic boards, etc. for the purpose of surface protection, decoration, and the like. Decorative plates obtained thereby are used for a variety of applications, such as decorative materials, building materials, and furniture.

The decorative sheets used for the applications mentioned above are required to have a surface-protecting layer that exhibits adhesion to the lower layer. In particular, the surface-protecting layer of the decorative sheet is required to exhibit adhesion even to a film with a small number of polar groups, which may be used on the surface of the lower layer.

As a decorative sheet having a surface-protecting layer that exhibits adhesion to a film, a hard-coat film having a hard-coat layer on at least one surface of a base material film has been proposed (see PTL 1).

However, the hard-coat film having a hard-coat layer of PTL 1 does not have sufficient adhesion between the base material film and the hard-coat film when used for various applications, and there is room for improvement.

Since decorative sheets are used by being bonded to the surfaces of wood boards, plastic boards, etc., they may be hit by objects. Therefore, the surface of the decorative sheets is required to have surface hardness, as well as scratch resistance.

Further, since decorative sheets are used by being bonded to the surfaces of articles for the purpose of decoration, they are required to conform to the shapes of the articles. For this reason, decorative sheets are required to have processability, i.e., being capable of being processed while conforming to the shapes of articles. The hard-coat film disclosed in PTL 1 is not analyzed for processability and thus has poor processability.

Accordingly, there is a demand for the development of decorative sheets having excellent adhesion to the lower layer, and excellent surface hardness and scratch resistance, as well as excellent processability.

### Citation List

### Patent Literature

PTL 1: JP2017-177667A

### Summary of Invention

### Technical Problem

An object of the present invention is to provide a decorative sheet having a surface-protecting layer that has excellent adhesion to the lower layer, and having excellent surface hardness and scratch resistance, as well as excellent processability.

### Solution to Problem

As a result of extensive research, the present inventor found that the above object can be achieved by a decorative sheet having at least a surface-protecting layer, the surface-protecting layer containing a crosslinked curable resin, and the decorative sheet having a peak height ratio of A to B ((A/B)×100 (%)) of 105% or more and 400% or less, with A representing the height of a peak appearing at 855 to 1325 cm⁻¹ and B representing the height of a peak appearing at 1650 to 1800 cm⁻¹, in infrared spectroscopic measurement of the surface-protecting layer, and a peak height ratio of B to C ((B/C)×100 (%)) of 1000% or more and 6000% or less, with C representing the height of a peak appearing at 3200 to 3500 cm⁻¹, in infrared spectroscopic measurement of the surface-protecting layer. Thus, the present invention has been completed.

Specifically, the present invention relates to the following decorative sheet and decorative plate.
1. A decorative sheet having at least a surface-protecting layer,
   the surface-protecting layer containing a crosslinked curable resin, and
   the decorative sheet having
   a peak height ratio of A to B ((A/B)×100 (%)) of 105% or more and 400% or less, with A representing the height of a peak appearing at 855 to 1325 cm⁻¹ and B representing the height of a peak appearing at 1650 to 1800 cm⁻¹, in infrared spectroscopic measurement of the surface-protecting layer, and
   a peak height ratio of B to C ((B/C)×100 (%)) of 1000% or more and 6000% or less, with C representing the height of a peak appearing at 3200 to 3500 cm⁻¹, in infrared spectroscopic measurement of the surface-protecting layer.
2. The decorative sheet according to Item 1, wherein the peak height ratio of A to B is 110% or more and 300% or less, and the peak height ratio of B to C is 1300% or more and 5500% or less.
3. The decorative sheet according to Item 1 or 2, wherein the crosslinked curable resin comprises an ionizing radiation-curable resin.
4. The decorative sheet according to Item 3, wherein the ionizing radiation-curable resin comprises an acrylic-based resin having a (meth)acryloyl group.
5. The decorative sheet according to any one of Items 1 to 4, wherein the surface-protecting layer contains at least one member selected from the group consisting of antibacterial agents, antiviral agents, and anti-allergen agents.
6. The decorative sheet according to any one of Items 1 to 5, which has a picture pattern layer, a transparent resin layer, and the surface-protecting layer in sequence on a base material sheet.
7. The decorative sheet according to Item 6, wherein at least one layer selected from the group consisting of the base material sheet and the transparent resin layer contains a flame retardant.
8. The decorative sheet according to Item 6 or 7, wherein at least one layer selected from the group consisting of the base material sheet, the picture pattern layer, the transparent resin layer, and the surface-protecting layer contains a biomass-derived component.
9. A decorative plate comprising the decorative sheet according to any one of Items 1 to 8 on a base material.

### Advantageous Effects of Invention

The decorative sheet of the present invention has a surface-protecting layer having excellent adhesion to the lower layer, and has excellent surface hardness and scratch resistance, as well as excellent processability. Therefore, a decorative plate in which the decorative sheet of the present invention is laminated can be used for various building materials, furniture, and the like.

### Brief Description of Drawings

Fig. 1 is a graph showing an example of the results of infrared spectroscopic measurement of the surface-protecting layer of the decorative sheet of the present invention.
Fig. 2 is a graph showing a method for determining the peak height in infrared spectroscopic measurement of the surface-protecting layer of the decorative sheet of the present invention.
Fig. 3 is a graph showing a method for determining the peak height in infrared spectroscopic measurement of the surface-protecting layer of the decorative sheet of the present invention.
Fig. 4 is a diagram showing an example of the layer structure of the decorative sheet of the present invention.
Fig. 5 is a diagram showing an example of the layer structure of the decorative plate of the present invention.
Fig. 6 is a diagram showing an example of hydrogen bonding between molecules of a crosslinked curable resin.
Fig. 7 is a schematic diagram showing a test method for resistance to fire spread.
Fig. 8 is a schematic diagram showing a test method for resistance to fire spread.

### Description of Embodiments

### 1. Decorative Sheet

The decorative sheet of the present invention is a decorative sheet having at least a surface-protecting layer, the surface-protecting layer containing a crosslinked curable resin, and the decorative sheet having a peak height ratio of A to B ((A/B)×100 (%)) of 105% or more and 400% or less, with A representing the height of a peak appearing at 855 to 1325 cm⁻¹ and B representing the height of a peak appearing at 1650 to 1800 cm⁻¹, in infrared spectroscopic measurement of the surface-protecting layer, and a peak height ratio of B to C ((B/C)×100 (%)) of 1000% or more and 6000% or less, with C representing the height of a peak appearing at 3200 to 3500 cm⁻¹, in infrared spectroscopic measurement of the surface-protecting layer. Due to the above characteristics, the decorative sheet of the present invention has a surface-protecting layer having excellent adhesion to the lower layer, and has excellent surface hardness and scratch resistance, as well as excellent processability. Therefore, a decorative plate in which the decorative sheet of the present invention is laminated can be used for a variety of applications, such as building materials and furniture.

As described above, the decorative sheet of the present invention has a peak height ratio of A to B ((A/B)×100 (%)) of 105% or more and 400% or less, with A representing the height of a peak appearing at 855 to 1325 cm⁻¹ and B representing the height of a peak appearing at 1650 to 1800 cm⁻¹, in infrared spectroscopic measurement of the surface-protecting layer, and has a peak height ratio of B to C ((B/C)×100 (%)) of 1000% or more and 6000% or less, with C representing the height of a peak appearing at 3200 to 3500 cm⁻¹, in infrared spectroscopic measurement of the surface-protecting layer. The details are explained below with reference to drawings.

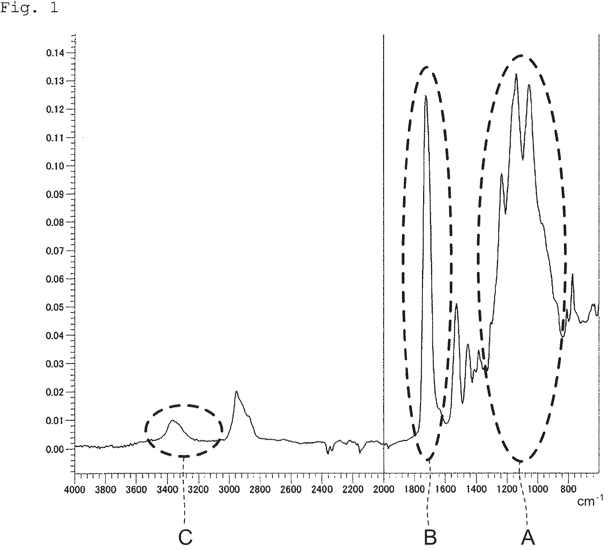

Fig. 1 is a graph showing an example of the measurement results of infrared spectroscopy (also referred to below as "IR") of the surface-protecting layer of the decorative sheet of the present invention. In Fig. 1, A indicates a peak due to an ether bond, B indicates a peak due to an ester bond, and C indicates a peak due to a urethane bond.

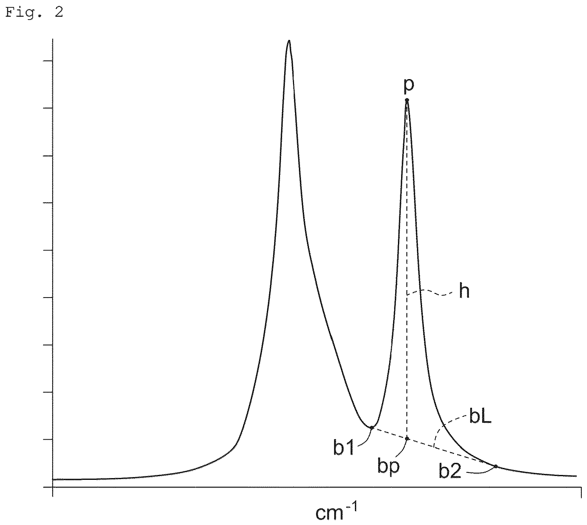

In the present specification, the height of a peak is determined as follows. Specifically, as shown in Fig. 2, two base points b1 and b2 of each peak are marked, and a baseline bL is drawn by connecting the base points with a straight line. Next, a vertical line is drawn downward from the position p at the peak top, and the intersection point bp with the baseline bL is specified. The length h between p and bp is determined to be the height of the peak.

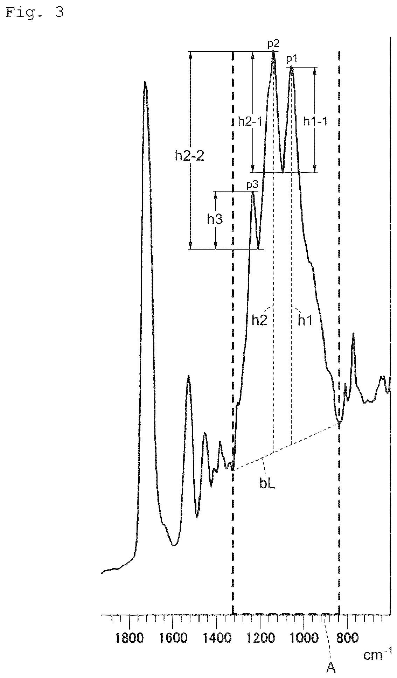

When peak A has multiple peaks as shown in Fig. 3, the peak height is determined as follows. Specifically, as shown in Fig. 3, when two adjacent peaks are present, and heights h1-1 and h2-1 from the trough between the two adjacent peaks to the peak tops are both 0.10 Abs or more, the two peak heights h1 and h2 are summed to determine the peak height. In Fig. 3, the peak with peak top p2 has adjacent peaks on both sides, and there are two heights h2-1 and h2-2 from the troughs between two peaks to the peak top. In this case, the shorter height h2-1 is used to determine whether it is 0.10 Abs or more.

In the present specification, the infrared spectroscopic measurement of the surface-protecting layer can be performed using a commercially available infrared spectroscopy measurement system.

In infrared spectroscopic measurement of the surface-protecting layer, the decorative sheet of the present invention has a peak height ratio of A to B ((A/B)×100 (%)) of 105% or more and 400% or less, with A representing the height of a peak appearing at 855 to 1325 cm⁻¹ and B representing the height of a peak appearing at 1650 to 1800 cm⁻¹. When the peak height ratio of A to B is less than 105%, too many ester bonds are present in the surface-protecting layer, which makes the surface-protecting layer too hard, reducing the processability of the decorative sheet. When the peak height ratio of A to B exceeds 400%, too many ether bonds are present, which makes the surface-protecting layer too soft, reducing the surface hardness and scratch resistance of the decorative sheet. The peak height ratio of A to B is preferably 110% or more and 300% or less, and more preferably 150% or more and 250% or less.

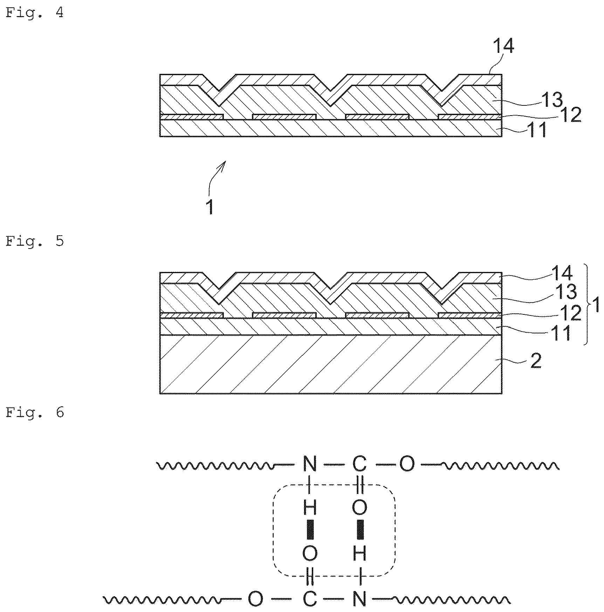

In infrared spectroscopic measurement of the surface-protecting layer, the decorative sheet of the present invention has a peak height ratio of B to C ((B/C)×100 (%)) of 1000% or more and 6000% or less, with C representing the height of a peak appearing at 3200 to 3500 cm⁻¹. When the peak height ratio of B to C is less than 1000%, too many urethane bonds are present in the surface-protecting layer, and hydrogen bonding between the -N-H group and -C=O group in urethane bonds as shown in Fig. 6 will increase excessively. This makes the surface-protecting layer too hard and reduces the processability of the decorative sheet. When the peak height ratio of B to C exceeds 6000%, too few urethane bonds are present in the surface-protecting layer, which makes the surface-protecting layer too soft, reducing the surface hardness and scratch resistance of the decorative sheet. The peak height ratio of B to C is preferably 1300% or more and 5500% or less, and more preferably 1500% or more and 5200% or less.

Examples of methods for adjusting the peak height ratio of A to B and the peak height ratio of B to C to be within the above ranges include a method of changing the amount of the crosslinked curable resin used to form the surface-protecting layer. When the crosslinked curable resin contains a large amount of ether bonds and a small amount of ester bonds, the peak height ratio of A to B is large. Conversely, when the crosslinked curable resin contains a small amount of ether bonds and a large amount of ester bonds, the peak height ratio of A to B is small. Also, when the crosslinked curable resin contains a large amount of ester bonds and a small amount of urethane bonds, the peak height ratio of B to C is large. Conversely, when the crosslinked curable resin contains a small amount of ester bonds and a large amount of urethane bonds, the peak height ratio of B to C is small.

The layers of the decorative sheet of the present invention are described in detail below. In the decorative sheet of the present invention, "surface" refers to a front surface. When the decorative sheet of the present invention is laminated on a base material or the like, the front surface is opposite to a surface that is in contact with the base material. The front surface is perceptible to the eye after lamination. In this specification, the surface side of the decorative sheet of the present invention may be referred to as "the front" or "above," and the opposite side may be referred to as "the back" or "below." Below, upper and lower limits of numerical ranges indicated with numerals before and after "to" mean that the lower limit is X or more and the upper limit is Y or less. For example, the phrase "α to β" means that the numerical range is α or more and β or less.

The layer thickness in this specification is a value measured at a location of the decorative sheet where there is no unevenness, such as embossing or protrusion of fine particles.

### Layer Structure of Decorative Sheet of Present Invention

The decorative sheet of the present invention has at least a surface-protecting layer, and the surface-protecting layer is preferably located on the outermost surface of the decorative sheet. The specific structure may be appropriately set according to, for example, the application of the decorative sheet. As shown in Fig. 4, examples of the layer structure include one comprising a base material sheet 11, a picture pattern layer 12 (a solid ink layer and/or a pattern ink layer), an adhesive layer (not shown), a transparent resin layer 13, and a surface-protecting layer 14 in sequence. A decorative sheet having such a layer structure is described below as a typical example.

### Surface-protecting Layer

The decorative sheet of the present invention has at least a surface-protecting layer. In the present specification, the surface-protecting layer contains a crosslinked curable resin.

Examples of the crosslinked curable resin include a thermosetting resin or an ionizing radiation-curable resin (e.g., electron beam-curable resin). In particular, in terms of scratch resistance due to high surface hardness, convex shape retention, productivity, and the like, the surface-protecting layer preferably contains an ionizing radiation-curable resin, and more preferably the resin that constitutes the surface-protecting layer is an ionizing radiation-curable resin.

Examples of thermosetting resins include unsaturated polyester resins, polyurethane resins (including two-component curable polyurethane), epoxy resins, amino alkyd resins, phenol resins, urea resins, diallyl phthalate resins, melamine resins, guanamine resins, melamine-urea copolycondensation resins, silicone resins, polysiloxane resins, and the like.

These resins may contain crosslinking agents, curing agents (e.g., polymerization initiators), polymerization accelerators, etc. Examples of curing agents include isocyanate, organic sulfonic acid salts, etc., which can be added to unsaturated polyester resins, polyurethane resins, etc.; organic amines etc., which can be added to epoxy resins; peroxides, such as methyl ethyl ketone peroxide; and radical initiators, such as azoisobutylnitrile, which can be added to unsaturated polyester resins.

As the method for forming the surface-protecting layer using a thermosetting resin, for example, a solution of a thermosetting resin is applied by a coating method, such as roll coating or gravure coating, followed by drying and curing.

The ionizing radiation-curable resin is not limited as long as it can undergo a crosslinking polymerization reaction upon irradiation with ionizing radiation and is formed into a three-dimensional polymer structure. For example, one or more types of prepolymers, oligomers, and monomers that have, in the molecule, a polymerizable unsaturated bond crosslinkable by irradiation with ionizing radiation, or an epoxy group can be used. Specific examples include acrylate resins, such as urethane acrylate, polyester acrylate, and epoxy acrylate; silicone resins, such as siloxane; polyester resins; epoxy resins; and the like.

The ionizing radiation-curable resin preferably comprises an acrylic-based resin having a (meth)acryloyl group. Due to the presence of an acrylic-based resin having a (meth)acryloyl group as the ionizing radiation-curable resin, hydrogen bonding occurs between the molecules of the ionizing radiation-curable resin, which further improves the surface hardness of the surface-protecting layer, as well as scratch resistance.

Examples of ionizing radiation include visible rays, ultraviolet rays (near-ultraviolet rays, vacuum ultraviolet rays, etc.), X rays, electron beams, ionic lines, etc. Of these, ultraviolet rays and/or electron beams are desirable.

Examples of the source of ultraviolet rays include ultra-high-pressure mercury lamps, high-pressure mercury lamps, low-pressure mercury lamps, carbon arc lamps, black-light fluorescent lamps, metal halide lamps, and like light sources. The wavelength of ultraviolet rays is about 190 to 380 nm.

Examples of the source of electron beams include various electron beam accelerators, such as Cockcroft-Walton, Van de Graaff, resonance transformer, insulated-core transformer, linear, Dynamitron, and high-frequency accelerators. The energy of the electron beam is preferably about 100 to 1000 keV, and more preferably about 100 to 300 keV. The exposure dose of the electron beam is preferably about 2 to 15 Mrad.

Although the ionizing radiation-curable resin is sufficiently cured by irradiation with an electron beam, it is preferable to add a photopolymerization initiator (sensitizer) when the resin is cured by irradiation with ultraviolet rays.

The photopolymerization initiator used in the case of a resin having a radically polymerizable unsaturated group is, for example, at least one of the following: acetophenones, benzophenones, thioxanthones, benzoin, benzoin methyl ether, Michler's benzoyl benzoate, Michler's ketone, diphenyl sulfide, dibenzyl disulfide, diethyl oxide, triphenyl biimidazole, isopropyl-N,N-dimethylaminobenzoate, and the like. The photopolymerization initiator used in the case of a resin having a cation polymerizable functional group is, for example, at least one of the following: aromatic diazonium salts, aromatic sulfonium salts, metallocene compounds, benzoin sulfonate, furyloxy sulfoxonium diallyliodosyl salts, and the like.

The amount of the photopolymerization initiator added is not particularly limited. The amount is generally about 0.1 to 10 parts by mass, per 100 parts by mass of the ionizing radiation-curable resin.

In recent years, the use of biomass-derived resins, which have a small environmental impact, has been analyzed in various fields. The resin that forms the surface-protecting layer of the decorative sheet of the present invention can also contain a biomass-derived component. Specifically, biomass polyolefins etc. can be used.

The surface-protecting layer may comprise a single layer or two or more multiple layers. In the present invention, when the surface-protecting layer comprises multiple layers, each layer contains a crosslinked curable resin. Further, when the surface-protecting layer comprises multiple layers, the infrared spectroscopic measurement of the surface-protecting layer is performed from the side of the outermost surface of the laminated surface-protecting layer.

The thickness of the surface-protecting layer may be within a range that does not impair the effects of the present invention, and is not particularly limited. The thickness of the surface-protecting layer is preferably 1 to 200 µm, more preferably 1 to 100 µm, even more preferably 3 to 50 µm, and particularly preferably 4 to 40 µm.

The surface-protecting layer may contain fine particles. Examples of fine particles include inorganic fillers, such as silica, aluminum oxide, silicon carbide, silicon dioxide, calcium titanate, barium titanate, magnesium pyroborate, zinc oxide, silicon nitride, zirconium oxide, chromium oxide, iron oxide, boron nitride, diamond, emery, and glass fiber; organic material powders or beads, such as acrylic, crosslinked alkyl, crosslinked styrene, benzoguanamine resin, urea-formaldehyde resin, phenol resin, polyethylene, and nylon; and the like. The fine particles may be used singly or in a combination of two or more.

The average particle size of the fine particles is preferably equal to or larger than the thickness of the surface-protecting layer. For exhibiting scratch resistance, the average particle size of the fine particles is preferably less than "the thickness of the surface-protecting layer + 40 µm," and more preferably equal to or less than "the thickness of the surface-protecting layer + 30 µm."

The average particle size of the fine particles can be measured by a known method, such as a laser diffraction method, a Coulter counter method, or a sedimentation method. The average particle size refers to the mode diameter.

The content of the fine particles in the surface-protecting layer is preferably 3 to 50 parts by mass, and more preferably 5 to 30 parts by mass, per 100 parts by mass of the resin components forming the surface-protecting layer.

Silicone may be added to the surface-protecting layer. When silicone is added to the surface-protecting layer, the amount of silicone added is preferably 0.1 to 1 part by mass, and more preferably 0.1 to 0.5 parts by mass, per 100 parts by mass of the resins (resin components) constituting the surface-protecting layer, in terms of achieving both the easiness of wiping and the difficulty of slipping.

The surface-protecting layer may contain, as needed, solvents, colorants such as dyes and pigments, fillers such as inorganic fillers, antifoaming agents, leveling agents, thixotropy-imparting agents, flame retardants, antibacterial agents, antiviral agents, anti-allergen agents, and other various additives.

As the inorganic filler, an inorganic filler having a thickness larger than that of the surface-protecting layer can be contained in the surface-protecting layer to impart a predetermined surface texture to the surface-protecting layer. Inorganic fillers can also be used as matting agents; when the surface-protecting layer contains an inorganic filler, the effect of limiting the curing shrinkage of the surface-protecting layer can also be expected. Therefore, in the present invention, the inorganic filler is preferably surface-treated (hydrophobized). Among these additives, particularly at least one member selected from the group consisting of antibacterial agents, antiviral agents, and anti-allergen agents is preferably contained in the surface-protecting layer, which is the outermost layer, in terms of easily obtaining the effect.

Examples of inorganic fillers include silica, aluminum oxide, silicon carbide, silicon dioxide, calcium titanate, barium titanate, magnesium pyroborate, zinc oxide, silicon nitride, zirconium oxide, chromium oxide, iron oxide, boron nitride, diamond, emery, glass fiber, and the like.

The method for surface-treating (hydrophobizing) the inorganic filler is not particularly limited, and a known method can be used. Examples include a method of hydrophobizing the inorganic filler with a silicone oil-based treatment agent; a method of treating the inorganic filler with an alkylsilazane-based treatment agent, a trimethylsilylating agent, and/or alkoxysilane, and then hydrophobizing the inorganic filler with a silicone oil-based treatment agent mentioned above; a method of hydrophobizing the inorganic filler with a silicone oil-based treatment agent, followed by further treatment with a trimethylsilylating agent or an alkylsilazane-based treatment agent; a method of hydrophobizing the inorganic filler with alkoxysilane; a method of treating the inorganic filler with alkoxysilane, followed by further treatment with a silicone oil-based treatment agent or with a silicone oil-based treatment agent and alkoxysilane; a method of treating the inorganic filler with a dimer diol siloxane and/or trimethylsilanol or cyclic siloxane; and the like. In addition to these hydrophobization methods, usable methods include hydrophobization methods using various coupling agents, such as silane coupling agents, titanate-based coupling agents, and aluminate-based coupling agents; phosphoric acid-based surfactants and fatty acid-based surfactants; or fat, stearic acid, etc. Below, each of the products mentioned above for hydrophobizing the untreated inorganic filler (e.g., all of the treatment agents, such as silicone oil-based treatment agents, silane coupling agents, and surfactants) are collectively referred to as "hydrophobizing agents."

The method for hydrophobizing the inorganic filler with a hydrophobizing agent is not particularly limited, and a known method can be used. Examples include a method of adding (e.g., spraying) a stock solution of the hydrophobizing agent or a diluted solution of the hydrophobizing agent in water or an organic solvent to the untreated inorganic filler (dry treatment method); a method of treating (e.g., immersing) the untreated inorganic filler in a stock solution of the hydrophobizing agent, a hydrophobizing agent-containing aqueous solution, or a hydrophobizing agent-containing organic solvent, followed by drying (wet treatment method); and the like. As a result of such treatment, a part or all of the surface of the inorganic filler is coated with the hydrophobizing agent (a), absorbs the hydrophobizing agent (b), or is coated with and absorbs the hydrophobizing agent (c) (combination of (a) and (b)). As a result, a hydrophobized inorganic filler is obtained. The hydrophobizing agents may be used singly or in a combination of two or more.

Antibacterial agents include inorganic antibacterial agents and organic antibacterial agents. Inorganic antibacterial agents are particularly desirable because they are generally safer, more durable, and more heat-resistant than organic antibacterial agents. Inorganic antibacterial agents are agents in which antibacterial metals, such as silver, copper, and zinc, are supported on various inorganic carriers. When the surface-protecting layer contains such an antibacterial agent, the amount thereof added is preferably 0.1 to 10 parts by mass per 100 parts by mass of the resin components in the surface-protecting layer; however, the details can be suitably adjusted depending on the type of antibacterial agent.

Antiviral agents can be generally roughly divided into organic and inorganic types. Examples of organic antiviral agents include quaternary ammonium salt-based, quaternary phosphonium salt-based, pyridine-based, pyrithione-based, benzimidazole-based, organic iodine-based, isothiazoline-based, anion-based, and ether-based antiviral agents. Examples of inorganic antiviral agents include those in which metal ions of silver, copper, or zinc are supported on carriers, such as zeolite, apatite, zirconia, glass, or molybdenum oxide. When the surface-protecting layer contains such an antiviral agent, the amount thereof added is preferably 0.1 to 10 parts by mass per 100 parts by mass of the resin components in the surface-protecting layer; however, the details can be suitably adjusted depending on the type of antiviral agent.

Among the above organic antiviral agents, benzimidazole-based antiviral agents, anion-based antiviral agents, or ether-based antiviral agents, all of which keep the particle shape, are particularly preferably used. Keeping the particle shape means that they exist in the form of particles without dissolving in the composition (ink before curing) that becomes the curable resin of the surface-protecting layer. Therefore, in the process of forming the surface-protecting layer, the particles of an imidazole-based compound, anion-based compound, or ether-based compound are more likely to emerge, and the particles of the imidazole-based compound, anion-based compound, or ether-based compound can be easily distributed unevenly on the outermost surface side of the surface-protecting layer. Due to the uneven distribution of the particles of the imidazole-based compound, anion-based compound, or ether-based compound on the outermost surface side of the surface-protecting layer, the amount of antiviral agent required to achieve predetermined antiviral performance can be reduced. Thus, it is easier to suppress the decrease in the scratch resistance of the surface-protecting layer.

The anion-based antiviral agent is preferably, for example, one containing a styrene resin, a styrene polymer derivative compound, and an unsaturated carboxylic acid derivative compound. The styrene polymer derivative compound and the unsaturated carboxylic acid derivative compound preferably contain at least one structure of styrene, sodium sulfonate, acrylic acid, maleic acid, and fumaric acid, and more preferably contain all of these structures. This is because there are two major types of viruses in terms of the presence or absence of an envelope, and the structure of the antiviral agent that can effectively inhibit the activity of each type of viruses is considered to be different. Therefore, for example, if the effect against only influenza virus, which is a non-enveloped virus, is expected, only a styrene polymer derivative compound may be contained, and particularly a single styrene resin alone may be sufficient to achieve the effect.

The inorganic antiviral agent is preferably a silver-based antiviral agent from the viewpoint of no biotoxicity and excellent safety. In particular, phosphate glass silver-supported compounds or silver zeolite compounds and molybdenum oxide silver double salt compounds are even more preferred because they exhibit antiviral performance even in small amounts, which can reduce the addition amounts.

When the surface-protecting layer contains such a silver-based antiviral agent, discoloration occurs depending on the surface-protecting layer (discoloration may occur in a state of the paint added due to heat/light, or discoloration may occur due to heat/light after the surface-protecting layer is formed); however, this can be improved by adding an ultraviolet inhibitor, a light stabilizer, etc. at appropriate times. For example, for the molybdenum oxide silver double salt compounds, the use of a benzotriazole-based compound is expected to improve discoloration.

The above anti-allergen agent contains either an inorganic compound or an organic compound; each of them may be used singly, or a mixture of two or more different types may be used. The inorganic compound is preferably a metal-supported material. When the surface-protecting layer contains such an anti-allergen agent, the amount thereof added is preferably 0.1 to 10 parts by mass per 100 parts by mass of the resin components in the surface-protecting layer; however, the details can be suitably adjusted depending on the type of anti-allergen agent.

Examples of the method for forming a surface-protecting layer containing an ionizing radiation-curable resin include a method of forming a surface-protecting layer by coating a solution (resin composition for forming the surface-protecting layer) containing (1) a resin, such as an ionizing radiation-curable resin, and (2) optionally other resins, fine particles, an ultraviolet absorber, an antibacterial agent, various additives mentioned above, and the like, by a coating method, such as gravure coating or roll coating, and then curing the ionizing radiation-curable resin.

### Base Material Sheet

The base material sheet is a layer on the surface (front surface) of which a picture pattern layer etc. are laminated in sequence.

The base material sheet is preferably, for example, a sheet (film) made of a thermoplastic resin. Specific examples include polyethylene, ethylene-α olefin copolymers, polypropylene, polymethylpentene, polybutene, ethylene-propylene copolymers, propylene-butene copolymers, ethylene-vinyl acetate copolymers, saponified products of ethylene-vinyl acetate copolymers, ethylene-(meth)acrylic acid copolymers, ethylene-(meth)acrylic acid ester copolymers, and like olefin-based resins, polyvinyl chloride, polyethylene terephthalate, polybutylene terephthalate, polyamide, polycarbonate, polyethylene naphthalate, ionomers, acrylic acid ester-based polymers, methacrylic acid ester-based polymers, and the like. In recent years, the use of biomass-derived resins, which have a small environmental impact, has been analyzed in various fields, and the resin that forms the base material sheet of the decorative sheet of the present invention can also contain a biomass-derived component; specifically, biomass polyolefins etc. can be used. The base material sheet is formed by using these resins singly or in a combination of two or more.

In this specification, the term "(meth)acrylic acid" refers to acrylic acid and/or methacrylic acid; the same applies to other portions referring to "meth."

The base material sheet may be colored. In this case, colorants (pigments or dyes) may be added to such thermoplastic resins as described above. Examples of usable colorants include inorganic pigments, such as titanium dioxide, carbon black, and iron oxide; organic pigments, such as phthalocyanine blue; and various dyes. Such colorants may be selected from one or more known or commercially available products. The amount of colorants may be appropriately selected according to the desired color etc.

The base material sheet may contain, as needed, various kinds of additives, such as fillers, matting agents, foaming agents, flame retardants, lubricants, antistatic agents, antioxidants, ultraviolet absorbers, and light stabilizers.

In the base material sheet, the same ultraviolet absorbers, light stabilizers, and flame retardants as those used for the transparent resin layer described below can be used in the same amounts.

The thickness of the base material sheet can be suitably determined depending on the application of the final product, the method of use of the final product, etc. In general, the thickness is preferably 20 to 300 µm.

The surface (front surface) of the base material sheet may be subjected to a corona discharge treatment, as needed, in order to enhance the adhesion of the ink that forms a picture pattern layer. The corona discharge treatment may be performed according to known methods under known conditions. The back surface of the base material sheet may be subjected to a corona discharge treatment, or a back-side primer layer may be formed, as needed.

### Picture Pattern Layer

The decorative sheet of the present invention may have a picture pattern layer.

The picture pattern layer is a layer that imparts a desired picture (design) to the decorative sheet, and the kind etc. of the picture are not limited. Examples include wood-grain patterns, leather patterns, marble grain patterns, pebbly patterns, tiled patterns, brick-masonry patterns, textile patterns, geometric figures, letters, symbols, abstraction patterns, and the like.

The method of forming a picture pattern layer is not particularly limited. For example, the picture pattern layer may be formed on the surface of a base material sheet by a printing method using ink obtained by dissolving (or dispersing) a known colorant (dye or pigment) together with a binding resin in a solvent (or a dispersion medium). As the ink, an aqueous composition can also be used from the viewpoint of reducing the VOC of the decorative sheet.

Examples of colorants include inorganic pigments, such as carbon black, titanium white, zinc oxide, red iron oxide, Berlin blue, and cadmium red; organic pigments, such as azo pigments, lake pigments, anthraquinone pigments, quinacridone pigments, phthalocyanine pigments, isoindolinone pigments, and dioxazine pigments; metallic powder pigments, such as aluminum powder and bronze powder; pearlescent pigments, such as titanium oxide-coated mica and bismuth chloride oxide; fluorescent pigments; noctilucent pigments; and the like. Such colorants may be used singly or in a combination of two or more. These colorants may be used in combination with a filler such as silica, an extender pigment such as organic beads, a neutralizer, a surfactant, and the like.

Examples of binding resins include hydrophilized polyester-based urethane resins, and the like, which can be used in combination with polyesters, polyacrylates, polyvinyl acetate, polybutadiene, polyvinyl chloride, chlorinated polypropylene, polyethylene, polystyrene, polystyrene-acrylate copolymers, rosin derivatives, alcohol adducts of styrene-maleic anhydride copolymers, cellulose-based resins, and the like. Specific examples of usable binding resins include polyacrylamide-based resins, poly(meth)acrylate-based resins, polyethylene oxide-based resins, poly N-vinyl-pyrrolidone-based resins, water-soluble polyester-based resins, water-soluble polyamide-based resins, water-soluble amino-based resins, water-soluble phenolic resins, and other water-soluble synthetic resins; water-soluble natural polymers such as polynucleotides, polypeptides, and polysaccharides; and the like. Other examples include natural rubber, synthetic rubber, polyvinyl acetate-based resins, (meth)acrylic-based resins, polyvinyl chloride-based resins, modified polyurethane-polyacrylic-based resins, mixtures of natural rubber etc. mentioned above, and other resins. Such binding resins may be used singly or in a combination of two or more.

Examples of solvents (or dispersion media) include petroleum-based organic solvents, such as hexane, heptane, octane, toluene, xylene, ethylbenzene, cyclohexane, and methylcyclohexane; ester-based organic solvents, such as ethyl acetate, butyl acetate, 2-methoxyethyl acetate, and 2-ethoxyethyl acetate; alcohol-based organic solvents, such as methyl alcohol, ethyl alcohol, normal propyl alcohol, isopropyl alcohol, isobutyl alcohol, ethylene glycol, and propylene glycol; ketone-based organic solvents, such as acetone, methyl ethyl ketone, methyl isobutyl ketone, and cyclohexanone; ether-based organic solvents, such as diethyl ether, dioxane, and tetrahydrofuran; chlorine-based organic solvents, such as dichloromethane, carbon tetrachloride, trichloroethylene, and tetrachloroethylene; inorganic solvents, such as water; and the like. These solvents (or dispersion media) may be used singly or in a combination of two or more.

In recent years, the use of biomass-derived resins, which have a small environmental impact, has been analyzed in various fields, and the binder resin that forms the picture pattern layer of the decorative sheet of the present invention may also contain a biomass-derived component. For example, a biomass-derived urethane (meth)acrylate etc. can be used. Specific examples include a binder resin comprising a urethane (meth)acrylate that contains at least a polyol, an isocyanate compound, and a hydroxy (meth)acrylate, and in which at least one member selected from the group consisting of the polyol, the isocyanate compound, and the hydroxy (meth)acrylate contains a biomass-derived component.

Examples of printing methods for forming the picture pattern layer include gravure printing, offset printing, screen printing, flexo printing, electrostatic printing, ink jet printing, and the like. When a solid-like picture pattern layer is formed over the entire surface, various coating methods, such as roll coating, knife coating, air knife coating, die coating, lip coating, comma coating, kiss coating, flow coating, and dip coating, can be used. In addition to the above, examples of usable methods include hand-drawing methods, marbling methods, photographic methods, transfer methods, laser beam drawing methods, electron beam drawing methods, metal partial deposition methods, etching methods, and the like. Such methods may be used in combination with other methods.

The thickness of the picture pattern layer is not particularly limited, and can be appropriately determined according to the characteristics of the product. The layer thickness is about 0.1 to 10 µm.

### Color-concealing Layer

In the decorative sheet of the present invention, a color-concealing layer may be further formed between the base material sheet and the picture pattern layer.

The color-concealing layer may conceal the ground color of an adherend when the decorative sheet and the adherend are bonded together, and may be generally formed so as to cover the base material sheet.

The known printing methods mentioned above can be used for the formation of the color-concealing layer. Further, the ink used in the formation of the picture pattern layer can be used as it is.

The coating amount is desirably in the range of 2 to 30 g/m². The thickness of the color-concealing layer is generally about 0.1 to 20 µm, and preferably about 1 to 10 µm.

### Adhesive Layer

In order to increase the adhesion between a transparent resin layer, described later, and the picture pattern layer, an adhesive layer may be formed on the picture pattern layer. The adhesive layer is preferably a transparent adhesive layer, and the transparent adhesive layer may be colorless transparent, colored transparent, translucent, or the like.

The adhesive is not particularly limited, and adhesives known in the field of decorative sheets can be used.

Examples of adhesives known in the field of decorative sheets include thermoplastic resins, such as polyamide resin, acrylic resin, and vinyl acetate resin; thermosetting resins, such as urethane-based resin; and the like. These adhesives are used singly or in a combination of two or more. Further, two-component curable polyurethane resins or polyester resins using isocyanate as a curing agent can also be applied.

The known printing methods mentioned above can be used for the formation of the transparent adhesive layer.

The thickness of the transparent adhesive layer is not particularly limited; however, the thickness after drying is about 0.1 to 30 µm, and preferably about 1 to 20 µm.

### Transparent Resin Layer

The decorative sheet for floors of the present invention may have a transparent resin layer.

The transparent resin layer is not particularly limited as long as it is transparent, and may be colorless transparent, colored transparent, translucent, or the like. Examples of resins that constitute the transparent resin layer include polyethylene, ethylene-α olefin copolymers, homopolypropylene, random polypropylene, and like polypropylenes, polymethylpentene, polybutene, ethylene-propylene copolymers, propylene-butene copolymers, ethylene-vinyl acetate copolymers, saponified products of ethylene-vinyl acetate copolymers, ethylene-(meth)acrylic acid copolymers, ethylene-(meth)acrylic acid ester copolymers, olefin-based elastomers, and like olefin-based resins, polyethylene terephthalate, polybutylene terephthalate, polyamide, ionomers, acrylic acid ester-based polymers, methacrylic acid ester-based polymers, polycarbonate, cellulose triacetate, and the like. In recent years, the use of biomass-derived resins, which have a small environmental impact, has been analyzed in various fields, and the resin that forms the transparent resin layer of the decorative sheet of the present invention can also contain a biomass-derived component; specifically, biomass polyolefins etc. can be used. In the transparent resin layer, these resins may be used singly or in a combination of two or more.

It is preferable that the transparent resin layer is a transparent thermoplastic resin layer. It is more preferable that the transparent resin layer contains an olefin-based resin typified by polypropylene resin or polyethylene resin. It is even more preferable that the resin constituting the transparent resin layer is an olefin-based resin mentioned above or an ionomer-based resin.

The transparent resin layer may be colored as long as the layer is transparent; however, it is particularly preferable not to mix a colorant.

The transparent resin layer may further contain various additives, if necessary. Examples of the additives include lubricants, such as silicone resins, waxes, and fluororesins; colorants, such as dyes and pigments; antioxidants; ultraviolet absorbers; light stabilizers; flame retardants; and the like. The content of the additives is not particularly limited, and is, for example, 0.1 mass% or more and 10 mass% or less per 100 mass% of the transparent resin layer.

From the viewpoint of imparting weather resistance, the transparent resin layer preferably contains an ultraviolet absorber.

Examples of ultraviolet absorbers include benzotriazole-based ultraviolet absorbers, benzophenone-based ultraviolet absorbers, triazine-based ultraviolet absorbers, and the like. Of these, preferred are triazine-based ultraviolet absorbers. The ultraviolet absorbers may be used singly or in a combination of two or more.

Of triazine-based ultraviolet absorbers, more preferred is a hydroxyphenyltriazine-based ultraviolet absorber, in which three of at least one organic group selected from a hydroxyphenyl group, an alkoxyphenyl group, and an organic group containing these groups are linked to the triazine ring, and still more preferred is a hydroxyphenyltriazine-based ultraviolet absorber represented by the following formula (A). Hydroxyphenyltriazine-based ultraviolet absorbers have a branched structure and are thus expected to be less likely to be bled out from the transparent resin layer, whereby excellent weather resistance is obtained for a longer period of time.

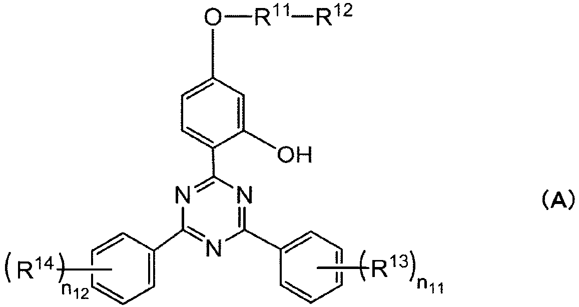

In formula (A), R¹¹ is a divalent organic group; R¹² is an ester group represented by -C(=O)OR¹⁵; R¹³, R¹⁴, and R¹⁵ each independently represent a monovalent organic group; and n₁₁ and n₁₂ are each independently an integer of 1 to 5.

Examples of the divalent organic group represented by R¹¹ include aliphatic hydrocarbon groups, such as alkylene and alkenylene groups. From the viewpoint of weather resistance, alkylene groups are preferred, and the number of carbon atoms thereof is preferably 1 or more and 20 or less, more preferably 1 or more and 12 or less, still more preferably 1 or more and 8 or less, and particularly preferably 1 or more and 4 or less. Alkylene and alkenylene groups may be linear, branched, or cyclic, and linear or branched alkylene and alkenylene groups are preferred.

Examples of alkylene groups having 1 or more and 20 or less carbon atoms include methylene, 1,1-ethylene, 1,2-ethylene, 1,3-propylene, 1,2-propylene, 2,2-propylene, and various other propylene groups (below, "various" refers to linear and branched forms, including isomer forms thereof), various butylene groups, various pentylene groups, various hexylene groups, various heptylene groups, various octylene groups, various nonylene groups, various decylene groups, various undecylene groups, various dodecylene groups, various tridecylene groups, various tetradecylene groups, various pentadecylene groups, various hexadecylene groups, various heptadecylene groups, various octadecylene groups, various nonadecylene groups, and various icosylene groups.

Examples of the monovalent organic groups represented by R¹³ and R¹⁴ include alkyl, alkenyl, cycloalkyl, aryl, arylalkyl, and other groups. Preferred are aromatic hydrocarbon groups, such as aryl and arylalkyl groups, and more preferred is an aryl group. In particular, the monovalent organic group represented by R¹³ and R¹⁴ is preferably a phenyl group.

Aryl groups preferably have 6 or more and 20 or less carbon atoms, more preferably 6 or more and 12 or less carbon atoms, and still more preferably 6 or more and 10 or less carbon atoms. Examples include a phenyl group, various methylphenyl groups, various ethylphenyl groups, various dimethylphenyl groups, various propylphenyl groups, various trimethylphenyl groups, various butylphenyl groups, various naphthyl groups, and the like. Arylalkyl groups preferably have 7 or more and 20 or less carbon atoms, more preferably 7 or more and 12 or less carbon atoms, and still more preferably 7 or more and 10 or less carbon atoms. Examples include a benzyl group, a phenethyl group, various phenylpropyl groups, various phenylbutyl groups, various methylbenzyl groups, various ethylbenzyl groups, various propylbenzyl groups, various butylbenzyl groups, various hexylbenzyl groups, and the like.

Examples of the monovalent organic groups represented by R¹⁵ include alkyl, alkenyl, cycloalkyl, aryl, arylalkyl, and other groups. Preferred are aliphatic hydrocarbon groups, such as alkyl and alkenyl groups, and more preferred is an alkyl group. Specifically, R¹² is preferably an alkyl ester group or alkenyl ester group, and more preferably an alkyl ester group.

Alkyl groups preferably have 1 or more and 20 or less carbon atoms, more preferably 2 or more and 16 or less carbon atoms, and still more preferably 6 or more and 12 or less carbon atoms. Examples include a methyl group, an ethyl group, various propyl groups, various butyl groups, various pentyl groups, various hexyl groups, various octyl groups, various nonyl groups, various decyl groups, various undecyl groups, various dodecyl groups, various tridecyl groups, various tetradecyl groups, various pentadecyl groups, various hexadecyl groups, various heptadecyl groups, various octadecyl groups, various nonadecyl groups, and various icosyl groups.

Alkenyl groups preferably have 2 or more and 20 or less carbon atoms, more preferably 3 or more and 16 or less carbon atoms, and still more preferably 6 or more and 12 or less carbon atoms. Examples include a vinyl group, various propenyl groups, various butenyl groups, various pentenyl groups, various hexenyl groups, various octenyl groups, various nonenyl groups, various decenyl groups, various undecenyl groups, various dodecenyl groups, various tridecenyl groups, various tetradecenyl groups, various pentadecenyl groups, various hexadecenyl groups, various heptadecenyl groups, various octadecenyl groups, various nonadecenyl groups, and various icosenyl groups.

More specifically, the hydroxyphenyltriazine compound represented by formula (A) is preferably
a hydroxyphenyltriazine compound in which R¹¹ is an alkylene group having 1 or more and 20 or less carbon atoms, R¹² and R¹⁵ are each an alkyl ester group, which is an alkyl group having 1 or more and 20 or less carbon atoms, R¹³ and R¹⁴ are each an aryl group having 6 or more and 20 or less carbon atoms, and n₁₁ and n₁₂ are each 1; more preferably
a hydroxyphenyltriazine compound in which R¹¹ is an alkylene group having 1 or more and 12 or less carbon atoms, R¹² and R¹⁵ are each an alkyl ester group, which is an alkyl group having 2 or more and 16 or less carbon atoms, R¹³ and R¹⁴ are each an aryl group having 6 or more and 12 or less carbon atoms, and n₁₁ and n₁₂ are each 1; still more preferably
a hydroxyphenyltriazine compound in which R¹¹ is an alkylene group having 1 or more and 8 or less carbon atoms, R¹² and R¹⁵ are each an alkyl ester group, which is an alkyl group having 6 or more and 12 or less carbon atoms, R¹³ and R¹⁴ are each an aryl group having 6 or more and 10 or less carbon atoms, and n₁₁ and n₁₂ are each 1; and particularly preferably
a hydroxyphenyltriazine compound in which R¹¹ is an alkylene group having 1 or more and 4 or less carbon atoms, R¹² and R¹⁵ are each an ester group, which is an alkyl group having 8 carbon atoms, R¹³ and R¹⁴ are each a phenyl group, and n₁₁ and n₁₂ are each 1.

Examples of the hydroxyphenyltriazine compound include 2-(4,6-diphenyl-1,3,5-triazin-2-yl)-5-[2-(2-ethylhexanoyloxy)ethoxy]phenol, 2-(2-hydroxy-4-[1-octyloxycarbonylethoxy]phenyl)-4,6-bis(4-phenylphenyl)-1,3,5-triazine, 2-(4,6-diphenyl-1,3,5-triazin-2-yl)-5-[(hexyl)oxy]-phenol, 2-[4-[(2-hydroxy-3-tridecyloxypropyl)oxy]-2-hydroxyphenyl]-4,6-bis(2,4-dimethylphenyl)-1,3,5-triazine, 2-ethyl-hexanoic acid-2-[4-(4,6-diphenyl-[1,3,5]triazin-2-yl)-3-hydroxy-phenoxy]-ethyl ester, octanoic acid-2-[4-(4,6-diphenyl-[1,3,5]triazin-2-yl)-3-hydroxy-phenoxy]-ethyl ester, 2,4,6-tris{2-(2-hydroxy-4-[1-octyloxycarbonylethoxy]phenyl)}-1,3,5-triazine, 2,4-bis(2-hydroxy-4-butyloxyphenyl)-6-(2,4-bis-butyloxyphenyl)-1,3,5-triazine, 2,4-bis(2,4-dimethylphenyl)-6-(2-hydroxy-4-iso-octyloxyphenyl)-s-triazine, 2,4-bis(2,4-dimethylphenyl)-6-(2-hydroxy-4-n-octyloxyphenyl)-1-3-5-triazine, 2,4-bis(2-hydroxy-4-butyloxyphenyl)-6-(2,4-bis-butyloxyphenyl)-1,3,5-triazine, and the like, and mixtures, modified products, polymers, and derivatives thereof.

The content of the ultraviolet absorber is preferably 0.2 to 10.0 parts by mass, more preferably 0.5 to 5.0 parts by mass, and even more preferably 1.0 to 4.0 parts by mass, per 100 parts by mass of the resin components that constitute the transparent resin layer.

Examples of light stabilizers include aromatic compounds, amine-based compounds, organic acid-based compounds, catechin-based compounds, and hindered amine-based compounds. Of these, hindered amine-based compounds are preferred. Hindered amine-based compounds are those having a structure with a 2,2,6,6-tetramethylpiperidine skeleton in the molecule.

The content of the light stabilizer is preferably 0.1 to 10 parts by mass, more preferably 0.3 to 8.0 parts by mass, and even more preferably 1.0 to 5.0 parts by mass, per 100 parts by mass of the resin components that constitute the transparent resin layer. As the light stabilizer, a hindered amine-based compound is preferably contained within the above ranges.

Examples of flame retardants include halogen-based flame retardants, phosphorus-based flame retardants, nitrogen-based flame retardants, aluminum-based flame retardants, antimony-based flame retardants, magnesium-based flame retardants, boron-based flame retardants, zirconium-based flame retardants, and the like. From an environmental standpoint, non-halogen-based flame retardants are more preferably used. These flame retardants may be used singly or in a combination of two or more.

Examples of phosphorus-based flame retardants include metal phosphinate-based flame retardants and phosphazene-based flame retardants. Regardless of its type, the content of the flame retardant is preferably 3 parts by mass or more, and preferably 30 parts by mass or less, per 100 parts by mass of the resin components that constitute the transparent resin layer. When the content of the flame retardant is within the above ranges, the flame retardancy of the decorative sheet improves while preventing the performance originally required of the decorative sheet from being impaired.

The thickness of the transparent resin layer is generally about 20 to 200 µm, but may exceed this range according to the application etc. of the decorative sheet for floors.

### Primer Layer

A primer layer may be provided on the transparent resin layer. The primer layer can be formed by applying a known primer agent to the surface of the transparent resin layer. Examples of primer agents include urethane resin-based primer agents comprising an acrylic-modified urethane resin (acrylic urethane-based resin) etc.; primer agents comprising a urethane-cellulose-based resin (e.g., a resin obtained by adding hexamethylene diisocyanate to a mixture of urethane and nitrocellulose); resin-based primer agents comprising a block copolymer of acrylic and urethane; and the like. The primer agent may contain additives, as needed. Examples of additives include fillers, such as calcium carbonate and clay; flame retardants, such as magnesium hydroxide; antioxidants; lubricants; foaming agents; ultraviolet absorbers; light stabilizers; and the like. The amount of additives to be mixed can be appropriately selected according to the characteristics of the product.

The coating amount of the primer agent is not particularly limited, but is generally about 0.1 to 100 g/m², and preferably about 0.1 to 50 g/m².

The thickness of the primer layer is not particularly limited, but is generally about 0.01 to 10 µm, and preferably about 0.1 to 1 µm.

### Back-side Primer Layer

A back-side primer layer may be provided, as needed, on the back surface of the base material sheet (the surface opposite to the surface on which the picture pattern layer is laminated). This is effective, for example, when a decorative plate is produced by laminating a decorative sheet and a base material (adherend).

The back-side primer layer can be formed by applying a known primer agent to the base material sheet. Examples of primer agents include urethane resin-based primer agents comprising an acrylic-modified urethane resin (acrylic urethane-based resin) etc.; primer agents comprising a urethane-cellulose-based resin (e.g., a resin obtained by adding hexamethylene diisocyanate to a mixture of urethane and nitrocellulose); resin-based primer agents comprising a block copolymer of acrylic and urethane; and the like. The primer agent may contain additives, as needed. Examples of additives include fillers, such as calcium carbonate and clay; flame retardants, such as magnesium hydroxide; antioxidants; lubricants; foaming agents; ultraviolet absorbers; light stabilizers; and the like. The amount of additives to be mixed can be appropriately selected according to the characteristics of the product.

The coating amount of the primer agent is not particularly limited, but is generally about 0.1 to 100 g/m², and preferably about 0.1 to 50 g/m².

The thickness of the back-side primer layer is not particularly limited, but is generally about 0.01 to 10 µm, and preferably about 0.1 to 1 µm.

### Synthetic Resin Backer Layer

A synthetic resin backer layer (also simply referred to below as "the backer layer"; a synthetic resin layer for improving scratch resistance and reducing the effect of a base material (adherend)) may be provided on the back surface of the base material sheet. The scratch resistance particularly refers to resistance to formation of depressions when a load is partially applied. Although the decorative sheet of the present invention has sufficient scratch resistance even without a backer layer, the presence of a backer layer can further improve various types of performance, such as scratch resistance.

The backer layer is suitably formed by subjecting a molten resin to extrusion molding. For example, extrusion molding using a T-die is suitable.

Examples of the method for bonding the back surface of the base material sheet and the backer layer include a method for bonding, by heat welding, the base material sheet and a backer layer obtained by subjecting a molten resin to extrusion molding; a method of providing an adhesive layer (and further a primer layer, if required) between the base material sheet and the backer layer to achieve bonding; and the like.

Examples of resins that constitute the backer layer include, but are not limited to, thermoplastic resins, such as polyethylene, polypropylene (PP), polyvinyl alcohol, ethylene-vinyl alcohol copolymers, polymethylene, polymethylpentene, polyethylene terephthalate, amorphous polyethylene terephthalate (A-PET), highly thermal resistant polyalkylene terephthalates (e.g., PET-G, product name (produced by Eastman Chemical Company), which is polyethylene terephthalate in which a part of the ethylene glycol is substituted by 1,4-cyclohexane dimethanol, diethylene glycol, or the like), polybutylene terephthalate (PBT), polycarbonate, polyarylate, polyethylene naphthalate, polyethylene naphthalate-isophthalate copolymers, polyimide, polystyrene, polyamide, ABS (acrylonitrile-butadiene-styrene copolymers), and the like. In recent years, the use of biomass-derived resins, which have a small environmental impact, has been analyzed in various fields, and the resin that forms the backer layer of the decorative sheet of the present invention can also contain a biomass-derived component; specifically, biomass polyolefins etc. can be used. These resins may be used singly or in a combination of two or more.

The thickness of the backer layer can be suitably determined according to the application of the final product, the method of use of the final product, etc. In general, the thickness is preferably 100 to 800 µm. Within this range, the thickness is more preferably 100 to 600 µm.

The adhesion surface of the backer layer may be subjected to a known adhesion-enhancing treatment, such as corona discharge treatment, plasma treatment, degreasing treatment, or surface-roughening treatment, as required. Moreover, in consideration of the adhesion with an adherend, a primer layer may be further provided on the back surface of the backer layer.

### Formation of Various Additives Contained in Layers of Decorative Sheet into Vesicles

The various additives to be added to the layers of the decorative sheet of the present invention described above (e.g., inorganic fillers to be added to the primer layer and the surface-protecting layer) are preferably formed into vesicles. Examples of the method for forming various additives into vesicles are not particularly limited, and known methods may be used to form the vesicles. Among various methods, the supercritical reverse phase evaporation method is preferable.

Examples of the vesicle formation method include the Bangham method, an extrusion method, a hydration method, a reverse phase evaporation method, and a freeze-thaw method, in addition to the supercritical reverse phase evaporation method. These vesicle formation methods are briefly described below. In the Bangham method, chloroform or a chloroform/methanol mixed solvent is placed in a container such as a flask, and a phospholipid is further added and dissolved therein; then, the solvent is removed with an evaporator to form a thin film of the phospholipid; and after a dispersion of additives is added, the mixture is hydrated and dispersed with a vortex mixer to thereby obtain vesicles. In the extrusion method, a phospholipid solution for a thin film is prepared, and the solution is passed through a filter in place of the mixer used as an external agitator in the Bangham method, thereby obtaining vesicles. In the hydration method, which is almost the same preparation method as the Bangham method, the mixture is gently stirred for dispersion, without using a mixer, to obtain vesicles. In the reverse phase evaporation method, a phospholipid is dissolved in diethyl ether or chloroform, a solution containing additives is added thereto to form a W/O emulsion, the organic solvent is removed from the emulsion under reduced pressure, and then water is added to thereby obtain vesicles. In the freeze-thaw method, cooling and heating are used as an external agitation, and cooling and heating are repeated to obtain vesicles.

The supercritical reverse phase evaporation method is specifically explained below. The supercritical reverse phase evaporation method refers to a method of adding an aqueous phase containing various additives as water-soluble or hydrophilic encapsulation materials to a mixture in which a material for forming the outer membrane of the vesicle is evenly dissolved in carbon dioxide in a supercritical state or carbon dioxide at a temperature or pressure condition equal to or greater than the supercritical point, thereby forming a capsule-like vesicle in which the various additives as encapsulation materials are encapsulated with a single membrane. "Carbon dioxide in a supercritical state" refers to carbon dioxide in a supercritical state at a temperature equal to or greater than the critical temperature (30.98°C), and a pressure equal to or greater than the critical pressure (7.3773±0.0030 MPa); and "carbon dioxide at a temperature or pressure condition equal to or greater than the critical point" refers to carbon dioxide under a condition in which only the critical temperature or only the critical pressure exceeds the critical condition. This method can produce a single-walled lamellar vesicle having a diameter of 50 to 800 nm. "Vesicle" is the general name of a folliculus having a spherically closed membrane structure containing a liquid phase. In particular, those having an outer membrane formed of a biological lipid, such as a phospholipid, are called "liposomes."

Examples of phospholipids include phosphatidylcholine, phosphatidylethanolamine, phosphatidylserine, phosphatidic acid, phosphatidylglycerol, phosphatidylinositol, cardiolipin, egg yolk lecithin, hydrogenated egg yolk lecithin, soybean lecithin, hydrogenated soybean lecithin, and like glycerophospholipids; and sphingomyelin, ceramide phosphorylethanolamine, ceramide phosphorylglycerol, and like sphingophospholipids.

Other examples of the materials constituting the outer layer include nonionic surfactants; and dispersants, such as a mixture of these surfactants and cholesterols or triacylglycerols.

Examples of nonionic surfactants include one or more members selected from polyglycerolether, dialkylglycerol, polyoxyethylene hardened castor oil, polyoxyethylene alkylether, polyoxyethylene sorbitan fatty acid ester, sorbitan fatty acid ester, polyoxyethylene polyoxypropylene copolymers, polybutadiene-polyoxyethylene copolymers, polybutadiene-poly2-vinylpyridine, polystyrene-polyacrylic acid copolymers, polyethylene oxide-polyethyl ethylene copolymers, polyoxyethylene-polycaprolactam copolymers, and the like.

Examples of the cholesterols include one or more members selected from cholesterol, α-cholestanol, β-cholestanol, cholestane, desmosterol (5,24-cholestadiene-3β-ol), sodium cholate, cholecalciferol, and the like.

The outer membrane of the liposome may be formed from a mixture of a phospholipid and a dispersant. By forming an outer layer as a liposome formed of a phospholipid, the decorative sheet of the present invention ensures desirable compatibility between the resin composition, which is the main component of each layer, and various additives.

### Method for Producing Decorative Sheet

The decorative sheet of the present invention can be obtained by forming at least the surface-protecting layer described above on the outermost surface. For example, the decorative sheet of the present invention can be obtained by laminating a picture pattern layer, a transparent adhesive layer, a transparent resin layer, and a primer layer on a base material sheet, and then forming the surface-protecting layer on the outermost surface.

When the decorative sheet is subjected to embossing, embossing may be performed after the surface-protecting layer is formed or before the surface-protecting layer is formed. For example, as a specific embodiment, 1) after a picture pattern layer, a transparent resin layer, and a primer layer are formed in sequence on a base material sheet, a surface-protecting layer may be formed, and finally embossing may be performed. As another specific embodiment, 2) after a picture pattern layer, a transparent resin layer, and a primer layer are formed in sequence on a base material sheet, embossing may be performed, and finally a surface-protecting layer may be formed. As still another specific embodiment, 3) after a picture pattern layer and a transparent resin layer are formed in sequence on a base material sheet, embossing may be performed, then a primer layer may be provided, and finally a surface-protecting layer may be formed. When Sm and Rz of the surface-protecting layer, and the ratio of the area of a portion from the surface to a depth of 30 µm are adjusted by embossing, embossing is preferably performed after the surface-protecting layer is formed.

Embossing may be performed, for example, by transferring an irregular pattern to the picture printing surface side of the decorative sheet at a sheet temperature of 120°C to 160°C and a pressure of 10 to 40 kg/cm².

### 2. Decorative Plate

The decorative plate of the present invention has the decorative sheet described above on a base material. The decorative sheet may be laminated on the base material so that the surface-protecting layer of the decorative sheet becomes the outermost surface layer.

The base material (adherend) is not limited, and adherends used for known decorative plates can be used. Examples include wood-based materials, metals, ceramics, plastics, glass, and the like. In particular, wood-based materials can be preferably used for the decorative sheet of the present invention. Specific examples of wood-based materials include sliced veneers, single-wood panels, plywood panels, wood fiberboards, particleboards, medium-density fiberboards (MDF), and the like that are formed from various materials, such as Japanese cedar, Japanese cypress, zelkova, pine, lauan, teak, and melapi.

The lamination method is not limited. For example, the decorative sheet can be bonded to the base material using an adhesive. The adhesive may be suitably selected from known adhesives according to, for example, the type of the base material. Examples include polyvinyl acetate, polyvinyl chloride, vinyl chloride-vinyl acetate copolymers, ethylene-acrylic acid copolymers, ionomers, butadiene-acrylonitrile rubber, neoprene rubber, natural rubber, and the like. These adhesives may be used singly or in a combination of two or more.

The thus-produced decorative plate can be used for, for example, interior materials of buildings, such as walls, ceilings, and floors; surface decorative plates for fittings, such as window frames, doors, and railings; and surface decorative plates for furniture or cabinets of light electrical appliances, OA equipment, etc. In particular, the decorative plate of the present invention can be preferably used as a decorative material for floors.

### Examples

The present invention is described in more detail below with reference to Examples and Comparative Examples. However, the present invention is not limited to the Examples.

### Example 1

### Production of Decorative Sheet

A primer layer (back-side primer layer) was provided on the back surface of a base material sheet made of a 60 µm-thick colored polypropylene film. Next, a picture pattern layer was formed on the surface of the base material sheet by printing, and further an adhesive layer was formed on the picture pattern layer. A transparent polypropylene-based resin (transparent random polypropylene-based resin) sheet having a thickness of 80 µm was laminated on the adhesive layer by an extrusion lamination method to form a transparent resin layer. Next, the surface of the transparent random polypropylene-based resin sheet was subjected to a corona discharge treatment, and then a two-component curable urethane resin was applied thereto to form a primer layer.

An ionizing radiation-curable resin comprising a urethane acrylate oligomer was applied in a coating amount of 15 µm to the entire surface of the primer layer by gravure coating, followed by irradiation with an electron beam using an electron irradiator under the conditions of an accelerating voltage of 165 KeV and 5 Mrad in an environment of an oxygen concentration of 200 ppm or less, thereby forming a surface-protecting layer. Further, the surface-protecting layer side was heated with an infrared non-contact heater to soften the base material sheet and the transparent resin layer, followed by embossing by heat pressure.

The urethane acrylate oligomer contained in the ionizing radiation-curable resin that forms the surface-protecting layer was a mixture of the following urethane acrylate oligomers in the following mixing ratio.
- Bifunctional urethane acrylate oligomer A (polyol component: polyester diol, Tg: 25°C, molecular weight: 1500)
- Hexafunctional aliphatic urethane acrylate oligomer B (Tg: 200°C or higher, molecular weight: 1500, UA306H produced by Kyoeisha Chemical Co., Ltd.)

### Mixing ratio (mass ratio) A:B = 80:20

### Production of Decorative Plate

An aqueous emulsion adhesive (mass ratio of BA-10L (main agent) to BA-11B (curing agent) = 100:2.5, produced by Japan Coating Resin Co., Ltd.) was uniformly applied at 80 g/m² to a medium-density wood fiberboard (MDF) having a thickness of 2.5 mm, bonded to the back-side primer layer side of the decorative sheet obtained above, and aged at room temperature for 3 days, thereby producing a decorative plate.

### Example 2

### Nanoization of Nucleating Agent Using Supercritical Reverse Phase Evaporation Method

The nanoization of a nucleating agent using a supercritical reverse phase evaporation method was performed as follows. First, 100 parts by mass of methanol, 82 parts by mass of a metal phosphate-based nucleating agent (Adeka Stab NA-11, produced by ADEKA Corporation), and 5 parts by mass of phosphatidylcholine were placed in a high-pressure stainless-steel container maintained at 60°C, the container was sealed, and carbon dioxide was injected so that the pressure was 20 MPa to create a supercritical state. Next, 100 parts by mass of ion-exchanged water was injected into the container while mixing with stirring was vigorously performed. After stirring was performed for 15 minutes while maintaining the temperature and pressure inside the container, carbon dioxide was discharged and the pressure was returned to atmospheric pressure to obtain nucleating-agent vesicles having an outer membrane made of phospholipids encapsulating the nucleating agent.

### Formation of Transparent Resin Layer, Picture Pattern Layer, and Color-concealing Layer

A polypropylene-based resin (transparent random polypropylene-based resin) containing the nucleating-agent vesicles obtained as described above was subjected to extrusion molding to a thickness of 80 µm, thereby forming a transparent resin layer. A picture pattern layer was formed on one surface of the transparent resin layer by printing a pattern using a two-component curable urethane ink (V351: produced by Toyo ink Co., Ltd.). Next, a two-component curable urethane ink (V351: produced by Toyo ink Co., Ltd.), which has concealing properties, was applied in a coating amount of 6 g/m² to the picture pattern layer to form a color-concealing layer .

### Formation of Primer Layer

A two-component curable urethane ink (PET-E, Reducer, produced by Dainichiseika Color & Chemicals Mfg. Co., Ltd.) as a primer agent was applied in a coating amount of 1 g/m² to the color-concealing layer to form a back-side primer layer.

### Formation of Embossed Pattern

Next, an embossed pattern was formed on the other surface of the transparent resin layer by pressing with a molding roll for embossing.

### Formation of Surface-protecting Layer

The following composition 1 for forming a surface-protecting layer (coating amount after drying: 5 µm (as a film thickness after drying; the same applies below)) and composition 2 for forming a surface-protecting layer (coating amount after drying: 10 µm) were laminated in sequence on the surface of the embossed pattern to form a surface-protecting layer comprising a surface-protecting layer 1 (lower layer) and a surface-protecting layer 2 (upper layer).

### Composition 1 for Forming Surface-protecting Layer

The following additives were added in the amounts shown below to 100 parts by mass of the main agent to prepare composition 1 for forming a surface-protecting layer.
- Main agent: acrylic polyol (acrylic polyol containing urethane bonds, curing agent (forming urethane bonds by bonding with N-H group-containing isocyanate) (glass transition temperature: about 100°C, weight average molecular weight (Mw): about 40,000, hydroxyl value: 12)

### Additives

- Ultraviolet absorber: 5 parts by mass of Tinuvin 479 (produced by BASF)
   Light stabilizer: 3 parts by mass of Tinuvin 123 (produced by BASF)
- Diluent solvent: 50 parts by mass of ethyl acetate
- Gloss modifier: 15 parts by mass of inorganic filler L-121 (produced by AGC Si-Tech Co., Ltd.)
- Curing agent: 5 parts by mass of Duranate TAP-100 (Asahi Kasei Corporation)

### Composition 2 for Forming Surface-protecting Layer

The following resins were mixed in a mass ratio of A:B:C = 40:40:20 to prepare a mixed resin. The following additives were added in the amounts shown below to 100 parts by mass of the mixed resin to prepare composition 2 for forming a surface-protecting layer.
- Resin A: Polyfunctional urethane acrylate oligomer having 3 to 15 functional groups
- Resin B: Polyfunctional urethane acrylate oligomer having 2 to 9 functional groups
- Resin C: 5 parts by mass of a curing agent (Duranate TAP-100, produced by Asahi Kasei Corporation) per 100 parts by mass of acrylic polyol having a glass transition temperature of about 100°C, a weight average molecular weight (Mw) of about 50,000, and a hydroxyl value of 15

### Additives

- Ultraviolet absorber: 5 parts by mass of Tinuvin 479 (produced by BASF)
- Light stabilizer: 3 parts by mass of Tinuvin 123 (produced by BASF)
- Diluent solvent: 50 parts by mass of ethyl acetate

### Production of Decorative Plate

An aqueous emulsion adhesive (mass ratio of BA-10L (main agent) to BA-11B (curing agent) = 100:2.5, produced by Japan Coating Resin Co., Ltd.) was uniformly applied at 80 g/m² to a medium-density wood fiberboard (MDF) having a thickness of 2.5 mm, bonded to the back-side primer layer side of the decorative sheet obtained above, and aged at room temperature for 3 days, thereby producing a decorative plate.

### Example 3

A decorative sheet and a decorative plate of Example 3 were produced in the same manner as in Example 1, except that the urethane acrylate oligomer contained in the ionizing radiation-curable resin for forming the surface-protecting layer was a mixture of the following urethane acrylate oligomers in the following mixing ratio.
- Bifunctional urethane acrylate oligomer A (polyol component: polyester diol, Tg: 25°C, molecular weight: 1500)
- Bifunctional urethane acrylate oligomer B (polyol component: polyester diol, Tg: -55°C, molecular weight 5000)
- Hexafunctional urethane acrylate oligomer C (Tg: 200°C or higher, molecular weight: 1500, UA306H produced by Kyoeisha Chemical Co., Ltd.)

### Mixing ratio (mass ratio) A:B:C = 60:10:30

### Example 4

A decorative sheet and a decorative plate were produced in the same manner as in Example 1, except that the urethane acrylate oligomer contained in the ionizing radiation-curable resin for forming the surface-protecting layer was a mixture of the following urethane acrylate oligomers in the following mixing ratio.
- Bifunctional urethane acrylate oligomer A (polyol component: polyester diol, Tg: 25°C, molecular weight: 1500)
- Hexafunctional urethane acrylate oligomer C (Tg: 200°C or higher, molecular weight: 1500, UA306H produced by Kyoeisha Chemical Co., Ltd.)

### Mixing ratio (mass ratio) A:B = 65:35

### Comparative Example 1

For resins for forming a surface-protecting layer, a urethane acrylate-based ultraviolet curable resin composition (TOMAX FA-3246, solids content: 40%, produced by Nippon Kako Toryo Co., Ltd.) and a urethane acrylate-based ultraviolet curable resin (ART RESIN UN-904, solids content: 100%, number of (meth)acryloyloxy groups: 10, produced by Negami Chemical Industrial Co., Ltd.) were used as main agents and mixed so that the mixing ratio (mass ratio) on a solids basis of TOMAX FA-3246 to UN-904 was 80/20. After Irgacure 184 (photopolymerization initiator, produced by BASF) was added in an amount of 3 parts by mass based on the solids content of the resin composition, the mixture was diluted with butyl acetate until the solids concentration in the paint for forming a surface-protecting layer became 30%, and the resulting product was thoroughly stirred to prepare a paint for forming a surface-protecting layer. The prepared paint for forming a surface-protecting layer was applied to the surface of the primer layer using a bar coater and dried with hot air in a drying oven at 80°C for 1 minute to form a coating layer having a film thickness of 5.0 µm. Next, UV irradiation was performed for curing using a UV irradiation device set at a height of 60 mm from the coating surface of the coating layer under the conditions of a UV irradiation dose of 250 mJ/cm², thereby forming a surface-protecting layer. Other than these points, a decorative sheet and a decorative plate of Comparative Example 1 were prepared in the same manner as in Example 1.

The decorative sheets produced in the Examples and the Comparative Example were subjected to the following measurements.

### IR Peak Height Ratio

The infrared spectrum of the surface of the surface-protecting layer of a decorative sheet was measured with an infrared spectrophotometer (IRAffinity-1A, produced by Shimadzu Corporation). On a spectral chart with absorbance on the vertical axis, A represents the height of a peak appearing at 855 to 1325 cm⁻¹, B represents the height of a peak appearing at 1650 to 1800 cm⁻¹, and C represents the height of a peak appearing at 3200 to 3500 cm⁻¹, and the ratio (A/B)×100 and the ratio (B/C) ×100 were defined as the peak height ratios.

The peak height was determined by drawing a baseline with respect to each wavelength range, connecting the peak top with the baseline such that the connected line was parallel to the vertical axis, and measuring the length of the connected line. In a case in which multiple peaks were present within a wavelength range, if the difference between the peak top of one of adjacent peaks and the trough between the adjacent peaks and the difference between the peak top of the other one of the adjacent peaks and the trough between the adjacent peaks were both 0.010 Abs or more, two peaks were considered to be present, and the heights of these two peaks were summed to determine the "peak height."

### Adhesion

A cross-cut peel test was performed on the surface-protecting layer of a decorative sheet in a JIS environment under the conditions of 25°C and 50% RH based on a test method in accordance with JIS K 5600-5-6. Specifically, on the surface-protecting layer of a decorative sheet, 11 vertical cuts and 11 horizontal cuts were formed with a utility knife at 1 mm intervals to form a grid of a total of 100 squares, and adhesive tape No. 252, produced by Sekisui Chemical CO., LTD., was applied thereto, pressed evenly with a spatula, and then peeled off in the direction at an angle of 60 degrees. After pressure bonding and peeling were performed five times at the same portion, the number of remaining squares on the surface-protecting layer was counted and evaluated according to the following evaluation criteria. When the adhesion was evaluated after an environmental test, the adhesion was evaluated at 25°C as described above after the decorative sheet was left in a hot and humid environment of 60°C and 90% RH for 3 weeks. The vertical direction of the decorative sheet refers to the direction in which the original decorative sheet is wound (MD direction in the production device), and the horizontal direction of the decorative sheet refers to the width direction of the original decorative sheet (TD direction in the production device).

### Evaluation Criteria

++: 100 squares
+: 95 squares or more and 99 squares or less
-: 80 squares or more and 94 squares or less
--: 79 squares or less

### Scratch Resistance

A rubbing test was performed by bringing steel wool (Bonstar #0000) into contact with the surface-protecting layer of a decorative sheet under a load of 300 g/m² and under the conditions of 300 reciprocations. The surface of the decorative sheet on the surface-protecting layer side was rubbed back and forth 100 times with steel wool (#0000) under a load of 1 kg based on a test method in accordance with JIS K 5600-5-10, and the degree of scratching was evaluated according to the following evaluation criteria.

### Evaluation Criteria

++: No scratches
+: A few scratches
-: A significant amount of scratches

### Pencil Hardness

The pencil hardness was measured based on a test method in accordance with JIS K 5600-5-4. The hardness at which no scratches were made on the surface was defined as the "pencil hardness."

### Whitening Due to Bending

A decorative sheet was cut into a size of 10 cm × 10 cm to make a test piece. The test piece was rapidly folded 180 degrees in both the vertical and horizontal directions (both vertically and horizontally) so that the surface-protecting layer side formed a peak, and was evaluated according to the following evaluation criteria. The vertical direction of the decorative sheet refers to the direction in which the original decorative sheet is wound (MD direction in the production device), and the horizontal direction of the decorative sheet refers to the width direction of the original decorative sheet (TD direction in the production device).

### Evaluation criteria

++: No whitening at all
+: Some whitening, but not noticeable
-: Noticeable whitening

Table 1 shows the results.

**Table 1**

| | Example 1 | Example 2 | Example 3 | Example 4 | Comparative Example 1 |
|---|---|---|---|---|---|
| Resin of surface-protecting layer | Urethane acrylate oligomers | Urethane acrylate oligomers | Urethane acrylate oligomers | Urethane acrylate oligomers | Urethane acrylate-based UV-curable resin (FA-3246) |
| Peak height ratio A/B (%) | 221 | 116 | 354 | 128 | 103 |
| Peak height ratio B/C (%) | 1723 | 5057 | 5680 | 1350 | 6500 |
| Adhesion | ++ | ++ | + | ++ | - |
| Adhesion after environmental test (after 3 weeks at 60°C, 90% RH) | ++ | ++ | + | ++ | - - |
| Scratch resistance (#0000, 300 reciprocations) | ++ | ++ | + | ++ | - |
| Pencil hardness | HB | H | B | H | 2B |
| Whitening due to bending | + | ++ | ++ | + | - |

The results shown in Table 1 revealed the following. In Examples 1 and 2, the peak height ratio of A to B was 221 or 116, and a moderate amount of ester bonds was present; thus, the surface-protecting layer had suitable hardness, and the evaluations of scratch resistance, pencil hardness, and whitening due to bending were excellent, indicating that the decorative sheets of Examples 1 and 2 exhibited these properties in combination. Further, in Examples 1 and 2, the peak height ratio of B to C was 1723 or 5057, and a moderate amount of urethane bonds was present. Therefore, hydrogen bonding was believed to be formed with the ester bonds in the surface-protecting layer, as shown in Fig. 6, and thus the adhesion was rated ++; additionally, since hydrolysis was suppressed, the adhesion after the environmental test was rated ++.

The results shown in Table 1 also revealed the following. In Example 3, the surface-protecting layer was relatively softer compared to the surface-protecting layers of Example 1 and 2. Specifically, the peak height ratio of A to B was greater compared to those of Example 1 and 2, and a smaller amount of ester bonds was present; thus, the surface-protecting layer was softer, and the scratch resistance and pencil hardness were slightly inferior compared to those of Example 1 and 2, although whitening due to bending was better suppressed. In Example 3, the peak height ratio of B to C was greater than those of Examples 1 and 2, and a smaller amount of urethane bonds was present; thus, the adhesion was slightly inferior to those of Example 1 and 2, and since hydrolysis was more likely to occur, the adhesion after the environmental test was slightly inferior.

Table 1 also revealed the following. In Example 4, the surface-protecting layer was relatively harder and more brittle compared to the surface-protecting layers of Example 1 and 2. Specifically, the peak height ratio of A to B was smaller compared to those of Example 1 and 2, and a greater amount of ester bonds was present; thus, the surface-protecting layer was harder and the pencil hardness was rated H, although the whitening due to bending was rated +. In Example 4, the peak height ratio of B to C was smaller than those of Examples 1 and 2, and a greater amount of urethane bonds was present; thus, hydrogen bonding was believed to be formed with the ester bonds in the surface-protecting layer, as shown in Fig. 6, and therefore the adhesion was rated ++, and since hydrolysis was further suppressed, the adhesion after the environmental test was rated ++.

### Example 5

A decorative sheet and a decorative plate were produced in the same manner as in Example 1, except that 3 parts by mass of a phosphate glass silver-supported compound (PG-711, produced by Koa Glass Co., Ltd.) was added as an antiviral agent to 100 parts by mass of the ionizing radiation-curable resin that forms the surface-protecting layer. The peak height ratio of A to B and the peak height ratio of B to C of the surface-protecting layer were the same as those of Example 1.

The decorative sheets produced in Examples 1 and 5 were subjected to the following evaluations.

### Antiviral Performance

### Evaluation method

The decorative sheets produced in Examples 1 and 5 were subjected to an antiviral performance test based on a method in accordance with the antiviral test method (ISO 21702). The antiviral activity value against influenza virus was calculated and evaluated according to the following evaluation criteria. The results are shown in Table 2. The rating "+" is evaluated as acceptable in actual use. The antiviral agent (parts by mass) shown in Table 2 represents the amount (parts by mass) of the antiviral agent used per 100 parts by mass of the ionizing radiation-curable resin.

### Evaluation criteria

+: Antiviral activity value was 2.0 or more.
-: Antiviral activity value was less than 2.0.

Table 2 shows the results.

**Table 2**

| | Example 1 | Example 5 |
|---|---|---|
| Resin of surface-protecting layer | Urethane acrylate oligomers | Urethane acrylate oligomers |
| Peak height ratio A/B (%) | 221 | 221 |
| Peak height ratio B/C (%) | 1723 | 1723 |
| Antiviral agent (parts by mass) | 0 | 3 |
| Antiviral performance | - | + |

### Example 6

A decorative sheet and a decorative plate were produced in the same manner as in Example 1, except that the 80 µm-thick transparent resin layer was formed by laminating the following resin composition by hot-melt extrusion as the transparent polypropylene-based resin (transparent random polypropylene-based resin). The peak height ratio of A to B and the peak height ratio of B to C of the surface-protecting layer were the same as those of Example 1.

### Resin Composition

- Transparent polypropylene resin: 100 parts by mass
- Metal phosphinate-based flame retardant (product name: Pekoflam STC (produced by Archroma); aluminum phosphinate): 10 parts by mass

The decorative sheets produced in Examples 1 and 6 were subjected to the following evaluations.

### Evaluation of Flame Retardancy

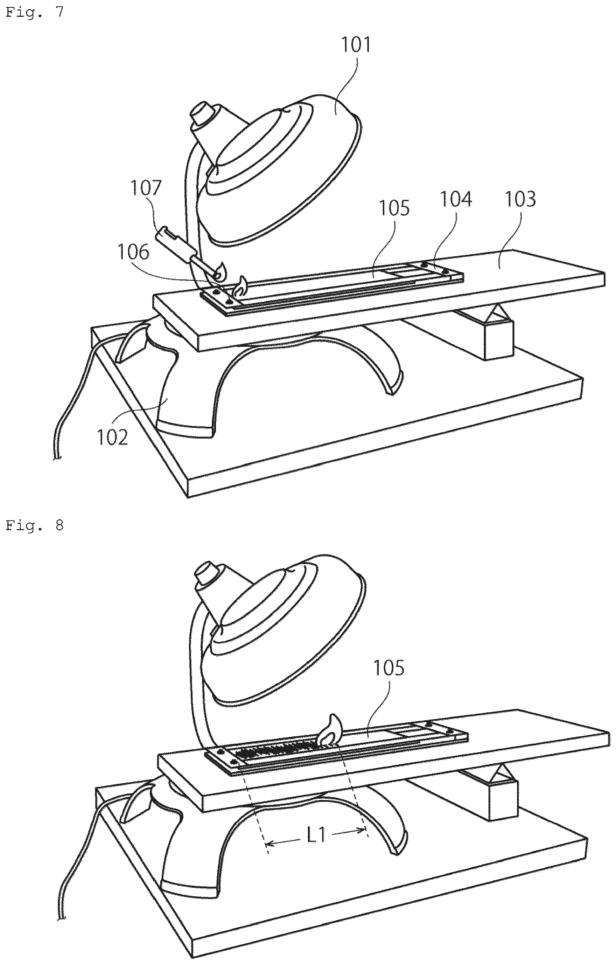

The decorative plates produced in Examples 1 and 6 were cut into a size of 9 cm × 30 cm to make a test piece. As shown in Figs. 7 and 8, a rectangular metal platform 103 was placed on a stand 102 of a commercially available household heater 101 (Zaigle Handsome SJ-100 (trade name)), and a test piece 105 was placed in a metal frame 104 set on the platform. The resistance to fire spread was tested under the conditions of a heater angle of 45° and a heater output dial of 4. More specifically, the test piece was pre-heated for 2 minutes using the household heater. Then, as shown in Fig. 7, the end 106 on the heater side in the longitudinal direction of the test piece was heated with a lighter 107 for 1 minute to ignite, and, as shown in Fig. 8, the fire was allowed to spread in the longitudinal direction of the test piece 105. Subsequently, the state of fire spread was visually observed, and the fire spread distance (L1) and burning duration were evaluated as described below. In this manner, horizontal burning (resistance to fire spread) was evaluated.

### Fire Spread Distance (L1)

A test piece was ignited with a lighter, and the fire spread progression distance from initial ignition, excluding the flame of the lighter, was measured as the fire spread distance (L1) and evaluated according to the following evaluation criteria. Decorative plates evaluated as + or higher are evaluated as acceptable in actual use.
++: L1 was less than 5 cm.
+: L1 was 5 cm or more and less than 10 cm.
-: L1 was 10 cm or more.

### Burning Duration

A test piece was ignited with a lighter, and the burning duration from the initial ignition until self-extinguishing of the fire (excluding the flame of the lighter) was measured and evaluated according to the following evaluation criteria. Decorative plates evaluated as + or higher are evaluated as acceptable in actual use.
+++: The burning continued for less than 100 seconds, or no ignition occurred.
++: The burning continued for 100 seconds or more, but less than 300 seconds.
+: The burning continued for 300 seconds or more, but less than 600 seconds.
-: The burning continued for 600 seconds or more (the fire did not self-distinguish in 600 seconds).

Table 3 shows the results.

**Table 3**

| | Example 1 | Example 6 |
|---|---|---|
| Resin of surface-protecting layer | Urethane acrylate oligomers | Urethane acrylate oligomers |
| Peak height ratio A/B (%) | 221 | 221 |
| Peak height ratio B/C (%) | 1723 | 1723 |
| Flame retardant in transparent resin layer (parts by mass) | 0 | 10 |
| Fire spread distance (L1) | - | ++ |
| Burning duration | - | +++ |

### Description of Reference Numerals

1. Decorative sheet
11. Base material sheet
12. Picture pattern layer
13. Transparent resin layer
14. Surface-protecting layer
2. Base material
101. Household heater
102. Stand of household heater
103. Rectangular metal platform
104. Metal frame
105. Test piece
106. End on the heater side in the longitudinal direction of the test piece
107. Lighter
L1. Fire spread distance

## Claims

1. A decorative sheet having at least a surface-protecting layer,
the surface-protecting layer containing a crosslinked curable resin, and
the decorative sheet having
a peak height ratio of A to B ((A/B)×100 (%)) of 105% or more and 400% or less, with A representing the height of a peak appearing at 855 to 1325 cm⁻¹ and B representing the height of a peak appearing at 1650 to 1800 cm⁻¹, in infrared spectroscopic measurement of the surface-protecting layer, and
a peak height ratio of B to C ((B/C)×100 (%)) of 1000% or more and 6000% or less, with C representing the height of a peak appearing at 3200 to 3500 cm⁻¹, in infrared spectroscopic measurement of the surface-protecting layer.

2. The decorative sheet according to claim 1, wherein the peak height ratio of A to B is 110% or more and 300% or less, and the peak height ratio of B to C is 1300% or more and 5500% or less.

3. The decorative sheet according to claim 1, wherein the crosslinked curable resin comprises an ionizing radiation-curable resin.

4. The decorative sheet according to claim 3, wherein the ionizing radiation-curable resin comprises an acrylic-based resin having a (meth)acryloyl group.

5. The decorative sheet according to claim 1, wherein the surface-protecting layer contains at least one member selected from the group consisting of antibacterial agents, antiviral agents, and anti-allergen agents.

6. The decorative sheet according to claim 1, which has a picture pattern layer, a transparent resin layer, and the surface-protecting layer in sequence on a base material sheet.

7. The decorative sheet according to claim 6, wherein at least one layer selected from the group consisting of the base material sheet and the transparent resin layer contains a flame retardant.

8. The decorative sheet according to claim 6, wherein at least one layer selected from the group consisting of the base material sheet, the picture pattern layer, the transparent resin layer, and the surface-protecting layer contains a biomass-derived component.

9. A decorative plate comprising the decorative sheet according to any one of claims 1 to 8 on a base material.
